# EUROPÄISCHE PATENTSCHRIFT

(11) **EP 1 841 586 B1**
(45) Veröffentlichungstag und Bekanntmachung des Hinweises auf die Patenterteilung: **25.01.2017**
(21) Anmeldenummer: 05821521.1
(22) Anmeldetag: 22.12.2005
(51) Int. Cl.: B29C 47/10, B29C 47/58, B29B 17/00

(54) **VORRICHTUNG ZUR BEF]LLUNG EINES EXTRUDERS MIT VORBEHANDELTEM THERMOPLASTISCHEM KUNSTSTOFFMATERIAL**
DEVICE FOR FILLING AN EXTRUDER WITH PRETREATED THERMOPLASTIC MATERIAL
DISPOSITIF DE REMPLISSAGE D'UNE EXTRUDEUSE AVEC UN MATERIAU THERMOPLASTIQUE PRETRAITE

(30) Priorität: 28.01.2005 AT 1422005
(43) Veröffentlichungstag der Anmeldung: 10.10.2007
(73) Patentinhaber: EREMA ENGINEERING-RECYCLING-MASCHINEN-ANLAGEN G.M.B.H., Freindorf, A-4052 Ansfelden (AT)
(72) Erfinder: BACHER, Helmut, A-4490 St. Florian (AT); SCHULZ, Helmuth, A-4020 Linz (AT); FEICHTINGER, Klaus, A-4040 Linz (AT)
(74) Vertreter: Wildhack & Jellinek
(86) Internationale Anmeldenummer: PCT/AT2005/000521
(87) Internationale Veröffentlichungsnummer: WO 2006/079128

(56) Entgegenhaltungen:
- EP-A- 0 698 462
- AT-B- 411 235
- GB-A- 1 008 429
- US-A- 3 482 006
- US-A- 3 969 314
- US-A- 4 125 208
- US-B1- 6 784 214
- PATENT ABSTRACTS OF JAPAN Bd. 012, Nr. 464 (M-771), 6. Dezember 1988 (1988-12-06) & JP 63 189222 A (SHOWA DENKO KK), 4. August 1988 (1988-08-04)

## Beschreibung

Die Erfindung bezieht sich auf eine Vorrichtung zur Befüllung eines Extruders mit vorbehandeltem thermoplastischem Kunststoffmaterial, insbesondere PET, gemäß Anspruch 1.

Derartige Vorrichtungen sind aus US 3 969 314 A und AT 411235 B bekannt. Diese bekannte Vorrichtungen eignet sich gut für die Recycling-Verarbeitung von thermoplastischem Kunststoffmaterial, insbesondere von PET (Polyethylenterephthalat), welches der Vorrichtung zumeist in Form von zerkleinertem Flaschenmaterial, häufig in Splittertorm, zugeführt wird. Die mit der Vorrichtung erzeugte Recycling-Ware kann auf dem Gebiet der Lebensmittelverpackung eingesetzt werden. Allerdings bedingt die bekannte Vorrichtung einen gewissen apparativen und auch energiemäßigen Aufwand und es besteht in Kundenkreisen häufig der Wunsch, bereits vorhandene Anlagenteile sinnvoll in Kombination mit der Vorrichtung verwenden zu können. Dies bringt häufig Probleme in Bezug auf den Anschluss der Befüllungsvorrichtung an den Extruder mit sich.

Die Erfindung geht nun aus von einer Vorrichtung der eingangs beschriebenen Art und setzt sich zur Aufgabe, die Vorrichtung universeller verwendbar und leichter steuerbar zu machen sowie den Energiebedarf durch Reduktion der Energieverluste geringer zu halten. Schließlich soll auch an apparativem Aufwand im Vergleich zur bekannten Vorrichtung eingespart werden können. Die Erfindung löst diese Aufgabe dadurch, dass. eine den rieselfähigen Zustand des in den Behältern vorbehandelten Materiales erhaltende Übergabestrecke in dichter Fließverbindung für das Material steht mit der Ausgangsöffnung der Behälter, die gegebenenfalls mehrere Behälterstufen bilden, und dass diese Übergabestrecke an ihrem Ausgang eine direkt und dicht an die Befüllungsöffnung des Extruders anschließbare Kupplung aufweist. Eine solche erfindungsgemäße Vorrichtung benutzt weiter die bei der eingangs geschilderten bekannten Vorrichtung gegebene Vakuumbehandlung des Materiales im Behälter, vermeidet aber zunächst die bei der bekannten Vorrichtung vorliegende zwingende Mehrstufigkeit, da die erfindungsgemäße Vorrichtung auch einstufig mit nur einem einzigen Behälter ausgebildet werden kann, was sogar in den meisten Fällen der Fall sein wird. Je weniger Stufen, bzw. Behälter vorhanden sind, desto leichter wird die Vorrichtung steuerbar und desto geringer werden die Energieverluste, abgesehen vom erzielten geringeren Aufwand. Besonders wichtig ist bei der Erfindung die Erhaltung des rieselfähigen Zustandes des behandelten Materials bis zum Extrudereingang. Die Rieselfähigkeit des Materiales setzt voraus, dass das Material in den Behältern oder dem Behälter zwar getrocknet und zumeist auch zumindest teilweise kristallisiert wird und in diesem Zustand zum gemeinsamen Ausgang der Behälter gelangt, aber nicht plastifiziert und somit nicht klebrig ist. Der erwähnte Zustand des Materiales wird daher im gesamten zwischen dem Ausgang der Behälter und dem Extrudereingang liegenden Bereich, der von der Übergabestrecke gebildet ist, aufrechterhalten. In davon abweichender Weise behandeltes, nämlich plastifiziertes Material ist erheblich klebrig, was sich nachteilig auswirkt auf die gleichmäßige Befüllung des Extruders. Erfolgt diese Befüllung ungleichmäßig oder kommt es sogar zu mehr oder weniger kurzzeitigen Unterbrechungen als Folge von Verklebungen, z.B. durch schlechte oder ungleichmäßige Kristallisation, so kann dies zum gefürchteten "Pumpen" des Extruders führen, was erfahrungsgemäß zu Problemen bei der an den Extruder angeschlossenen Weiterverarbeitungsanlage führt. Wird aber durch die erfindungsgemäße Vorrichtung über den rieselfähigen Zustand des dem Extruder zugeführten Materials eine gleichmäßige Befüllung des Extruders sichergestellt, dann vermeidet dies nicht nur die geschilderten Schwierigkeiten, sondern es ergibt sich zumeist auch ein höherer Durchsatz des Extruders.

Die Übergabestrecke erleichtert auch die bauliche Anpassung an die Befüllungsöffnung des Extruders, denn häufig sind die örtlichen Gegebenheiten so geartet, dass zwischen dem Behälter und dem Extruder ein, mitunter erheblicher, räumlicher Abstand eingehalten werden muss, der durch die Übergabestrecke problemlos überbrückt werden kann.

Maßnahmen zur Erhaltung des rieselfähigen Zustandes eines Kunststoffmateriales sind an sich bekannt, so dass es hier genügt, nur einige der wichtigsten Maßnahmen kurz zu erwähnen, z.B. die Vermeidung einer Temperaturerhöhung des Materiales im Verlauf der Übergabestrecke, oder die Vermeidung von Querschnittsverengungen in der Übergabestrecke oder von komprimierenden Elementen, die Einhaltung richtiger Schüttwinkel von Trichtern usw.

Vor allem aber wird bei der erfindungsgemäßen Vorrichtung dem Umstand Rechnung getragen, dass in kunststoffverarbeitenden Betrieben, insbesondere auf dem Recyclinggebiet, Extruder häufig schon vorhanden sind. Bei der erfindungsgemäßen Vorrichtung bildet somit der Extruder nicht notwendigerweise bereits einen Bestandteil der Vorrichtung, d.h., dass der Extruder nicht notwendigerweise vom selben Erzeuger stammen muss wie die dem Extruder vorgeschalteten Anlagenteile. Solche, schon am Aufstellungsort der Anlage von früher her vorhandene Extruder, mit welchen das behandelte Material schließlich plastifiziert und der weiteren Bearbeitung zugeführt wird, werden im folgenden als "Fremdextruder" bezeichnet. Es handelt sich hierbei um herkömmliche Extruder (Einschnecken-, Doppel- oder Mehrschneckenextruder), die sich jedoch nicht ohne weiteres zur Verarbeitung von zu recyclendem PET-Material eignen, da solches Aufgabegut bei üblichen Anlagen zumeist feucht bzw. nicht kristallin vorliegt und in dieser Form bei der Recyclingbehandlung leidet. Für einen Anschluss der erfindungsgemäßen Vorrichtung an solche bereits bestehende Extruder ist gemäß einer Weiterbildung der Erfindung die Vorrichtung selbst extruderlos und mit der Kupplung an die Befüllungsöffnung eines den Extruder bildenden Fremdextruders unmittelbar und dicht anschließbar. Hierbei bestehen zwei grundsätzliche Varianten, je nachdem, ob der Einzugsbereich der Befüllungsöffnung des Fremdextruders vakuumdicht ist oder nicht. Im ersteren Fall ist die Übergabestrecke evakuierbar. Diese Evakuierung der Übergabestrecke kann schon durch das im Behälter erzeugte Vakuum erfolgen, welches in die vakuumdichte Übergabestrecke und auch in den Einzugsbereich des Extruders hineinwirkt. Ist hingegen der erwähnte Einzugsbereich nicht vakuumdicht und kann dieser Einzugsbereich auch nicht mit erträglichem Aufwand in einen vakuumdichten Zustand gebracht werden oder besteht bei der Gesamtanlage der Wunsch, im Behälter und der Übergabestrecke unterschiedliche Vakua einzustellen, dann enthält die Übergabestrecke eine Vakuumschleuse. Die erwähnte Vakuumdichtheit des Extruders ist so zu verstehen, dass das Vakuum in der Übergabestrecke durch den Extruder nicht wesentlich gestört wird, so dass keine wesentliche Schädigung des die Übergabestrecke durchlaufenden rieselfähigen Materials stattfindet, weil der allfällige Zutritt von Luftsauerstoff und/oder Luftfeuchte nur gering ist.

Als Einzugsbereich des Extruders ist jener Bereich zu verstehen, welcher der Befüllungsöffnung des Extruders benachbart ist, insbesondere auf der dem Extruderkopf abgewendeten Seite des Extruders, welche zumeist die Motorseite ist.

Die besondere konstruktive Ausbildung der Übergabestrecke hängt ab von den Besonderheiten des ins Auge gefassten Anwendungsgebietes. Die Übergabestrecke kann zumindest einen Trichter oder einen trichterähnlichen Sammelraum aufweisen, in den das aus dem Behälter kommende vorbehandelte Material hineinrieseln kann. Es kann aber auch an die Austragsöffnung des Behälters eine Austragsvorrichtung angeschlossen sein, z.B. eine Schnecke (die im wesentlichen kompressionslos arbeiten muss, um die Rieselfähigkeit des Materials nicht zu beeinträchtigen) oder ein Zellenradförderer od. dgl. Dies bietet in einfacher Weise die Möglichkeit, die pro Zeiteinheit dem Extudereingang zugeführte Materialmenge dadurch zu regeln, dass eine Einrichtung zur Regelung des Fördervolumens oder Fördergewichtes der Austragsvorrichtung vorgesehen ist. Als Alternative zu einer solchen Austragsvorrichtung kann im Rahmen der Erfindung zwischen der Austragsöffnung des Behälters und der Übergabestrecke ein den Austrag des Materials aus den Behälter regelndes Ventil, insbesondere ein Schieber, vorgesehen sein.

Wie bereits erwähnt, kann der Extruder auch ein Doppel- oder Mehrschneckenextruder sein. Hierfür ist es zweckmäßig, die erfindungsgemäße Konstruktion so auszubilden, dass die Übergabestrecke eine Dosiereinrichtung für die Befüllung eines solchen Extruders aufweist. Doppel- oder Mehrfachschneckenextruder plastifizieren nur im teilgefüllten (unterfütterten) Zustand gut, welche Bedingung durch die Dosiereinrichtung in einfacher Weise erfüllt wird. Auch bei der Dosiereinrichtung kann eine Regelung des Fördervolumens oder des Fördergewichtes stattfinden.

Die Übergabestrecke kann auch zumindest einen Übergaberaum aufweisen, der mit einer Füllstandsregelung versehen ist.

Wie bereits erwähnt, bietet die Erfindung Vorteile in solchen Fällen, in welchen schwierige örtliche Gegebenheiten vorliegen, z.B. kein Platz in der Nähe des Extruders oder andere Umstände, welche einen erheblichen räumlichen Abstand zwischen Extruder und der Vorrichtung bedingen.. In solchen Fällen kann die Übergabestrecke zumindest eine Fördereinrichtung für das rieselfähige Material aufweisen, z.B. eine Transportschnecke, welche Fördereinrichtung zumindest einen Großteil des erwähnten Abstandes überbrückt.

Da das erwähnte vorbehandelte Material in der Regel luftsauerstoff- und/oder luftfeuchteempfindlich ist, ist nach Möglichkeit anzustreben, die gesamte Übergabestrecke gegenüber der Umgebungsluft abgeschlossen und evakuierbar zu halten. Ist dies nicht mit Sicherheit erzielbar, so kann das im Behälter befindliche Vakuum durch eine in der Übergabestrecke befindliche, bereits erwähnte, Vakuumschleuse gesichert werden und es kann der unevakuierbare Bereich mit einem das in diesem Bereich befindliche Material schützenden gasförmigen Medium gespült werden, z.B. mit Inertgas, Trockenluft oder Warmluft. Es ist zweckmäßig, eine solche Vakuumschleuse in der Übergabestrecke nahe der Befüllungsöffnung des Extruders bzw. nahe der Kupplung anzuordnen, um einen großen Teil der Übergabestrecke problemlos unter Vakuum halten zu können, z.B. dadurch, dass das im Behälter erzeugte Vakuum auch in diesem Teil der Übergabestrecke wirksam belassen wird.

Alle diese erwähnten Varianten können selbstverständlich in beliebiger Kombination Verwendung finden, je nach dem ins Auge gefassten Anwendungsgebiet.

Im einfachsten Fall besteht jedoch auch die Möglichkeit, die Übergabestrecke als Kanal auszubilden, der die Ausgangsöffnung des Behälters unmittelbar mit der Kupplung verbindet. In diesen Kanal wird das in dem Behälter behandelte Material durch die umlaufenden Werkzeuge eingeschleudert.

Bei allen Ausführungsformen findet ein Aufschmelzen bzw. Plastifizieren des verarbeiteten Kunststoffmaterials, insbesondere PET, erst im Extruder statt, der mit oder ohne Entgasung ausgeführt sein kann.

Eine einstufige Ausbildung der erfindungsgemäßen Vorrichtung hat nicht zwingend zur Folge, dass nur ein einziger Behälter vorhanden ist, wenngleich diese Ausführungsform wohl in der Regel getroffen wird. Es ist jedoch auch möglich, zwei oder mehrere Behälter parallel in einen gemeinsamen Ausgang fördern zu lassen, gegebenenfalls alternierend, aus welchem Ausgang das Material in der beschriebenen Weise dem Extruder zugeführt wird. Desgleichen ist es möglich, allerdings mit vergrößertem Aufwand, zwei oder mehr Behälterstufen vorzusehen, die vom behandeltem Material der Reihe nach durchlaufen werden. Jede dieser Behälterstufen kann einen Behälter oder mehrere Behälter umfassen. Selbstverständlich gilt auch für alle diese Ausführungsformen, dass überall der rieselfähige Zustand des bearbeiteten Materials bis zur Befüllungsöffnung des Extruders erhalten bleibt.

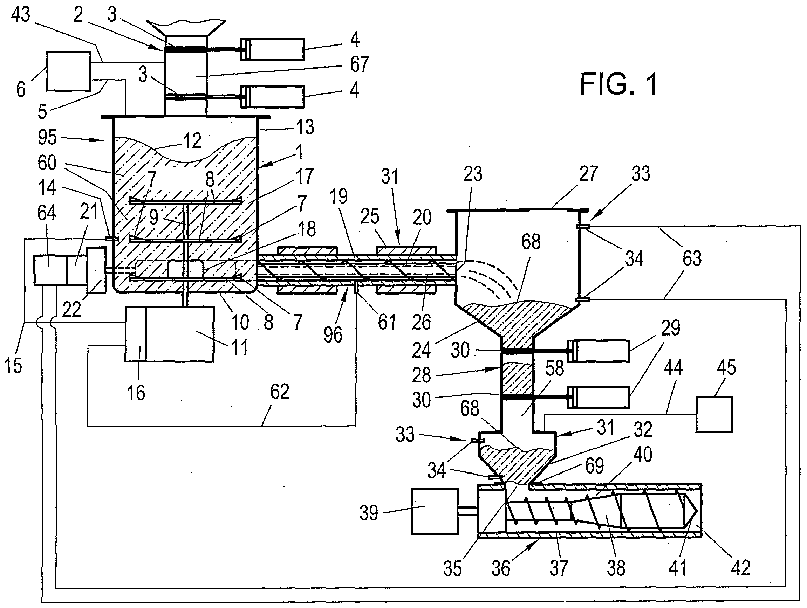

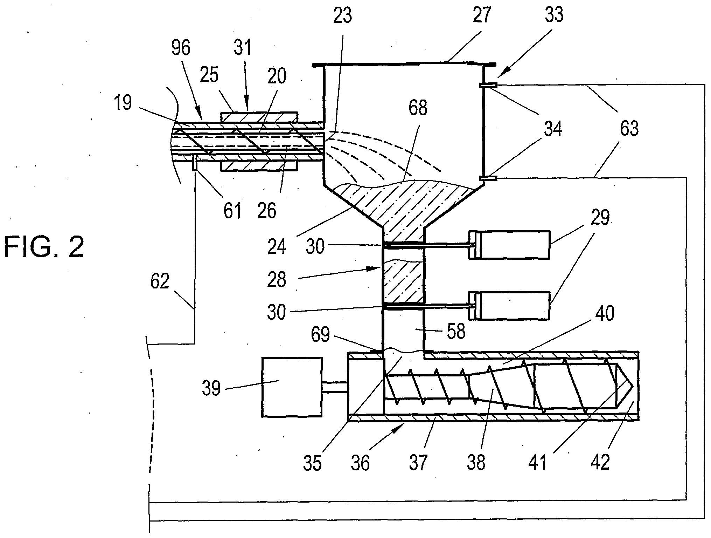

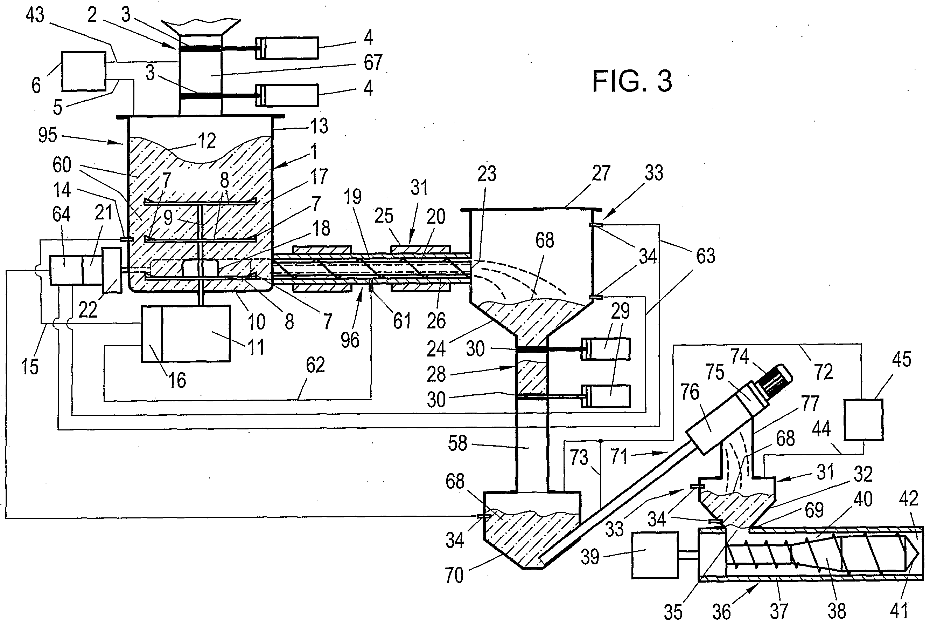

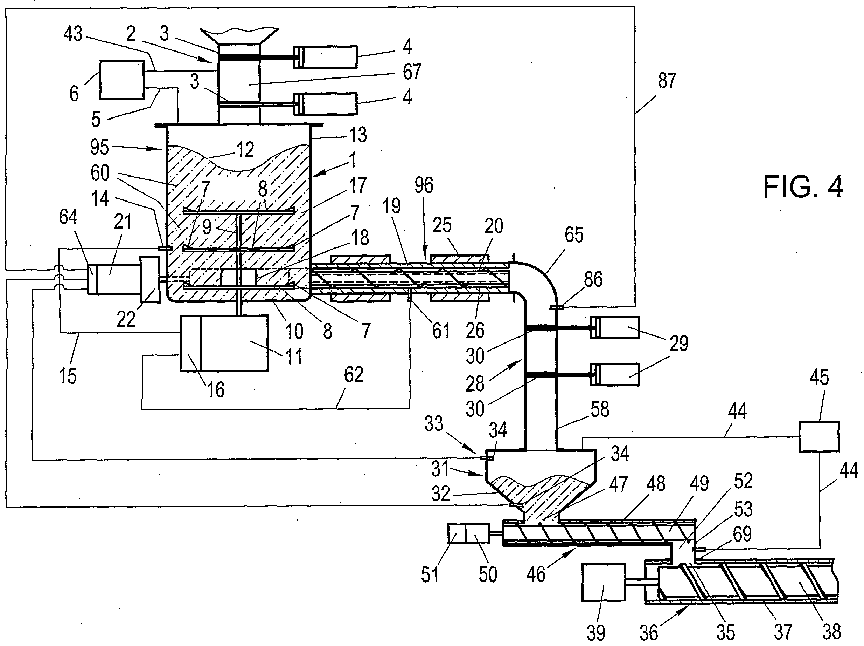

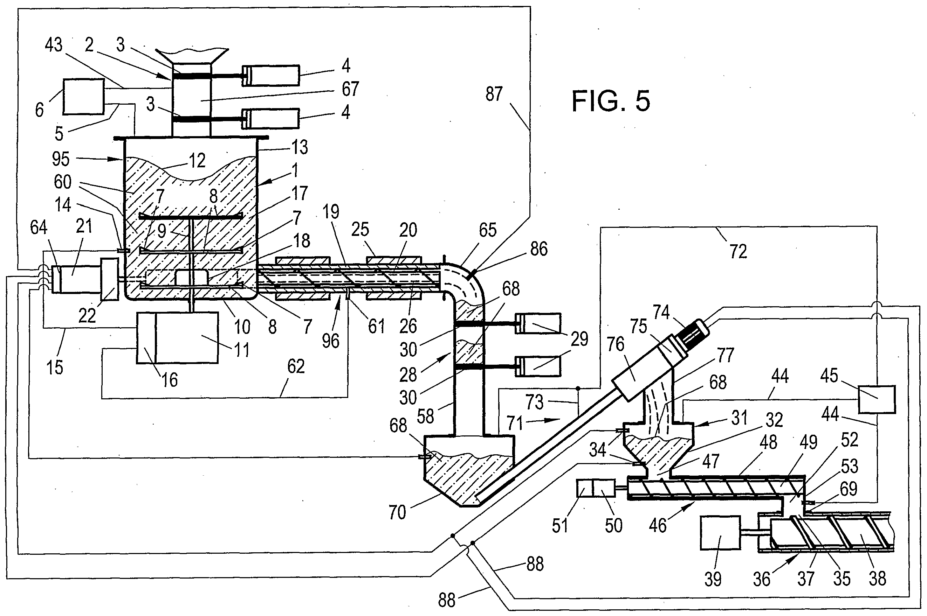

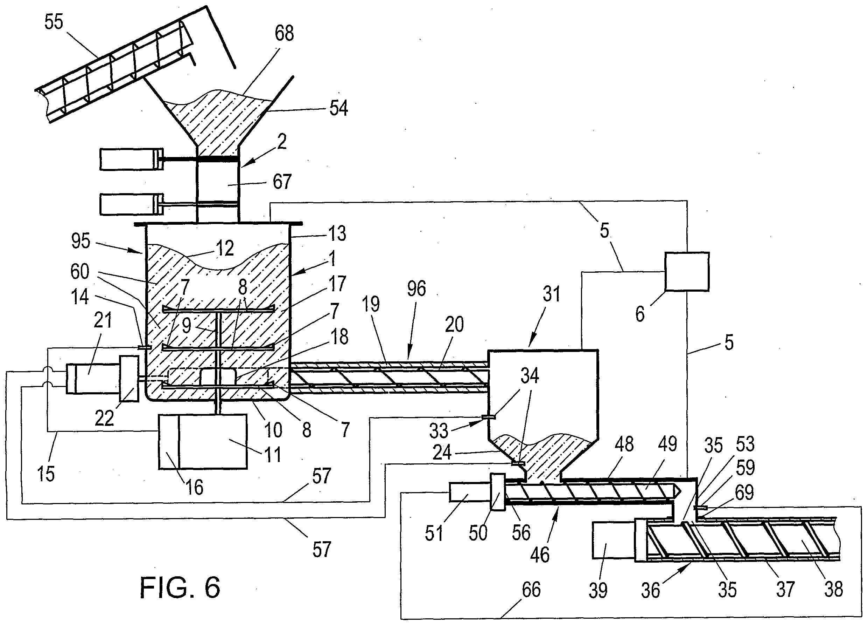

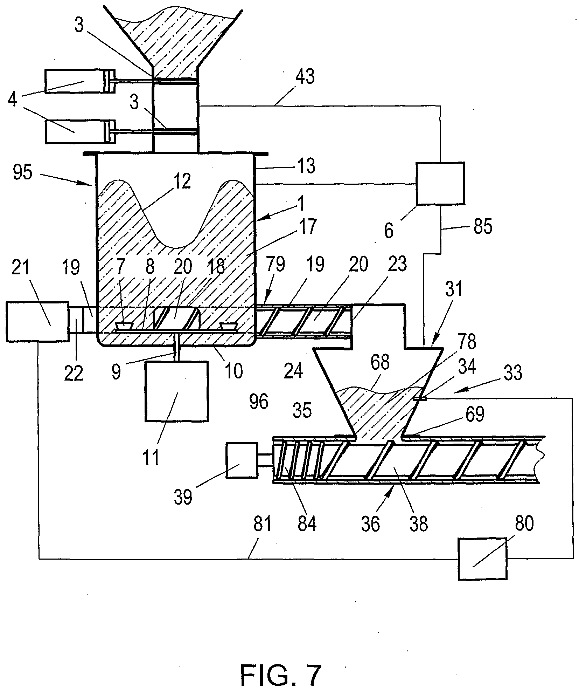

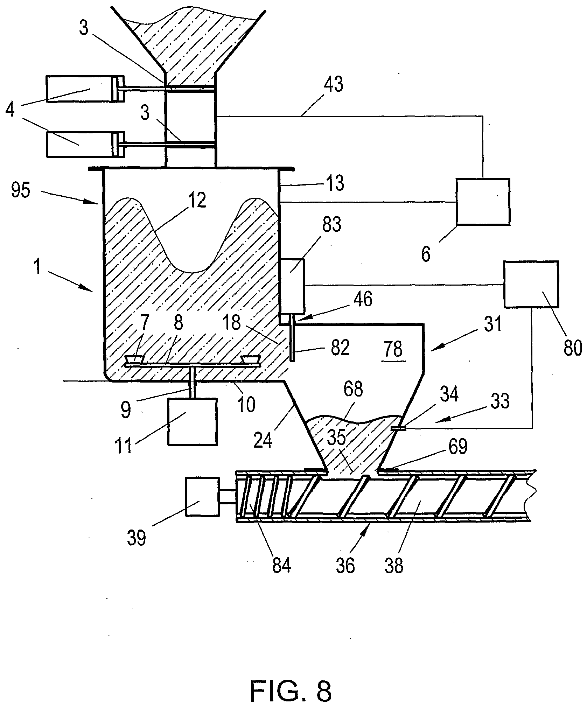

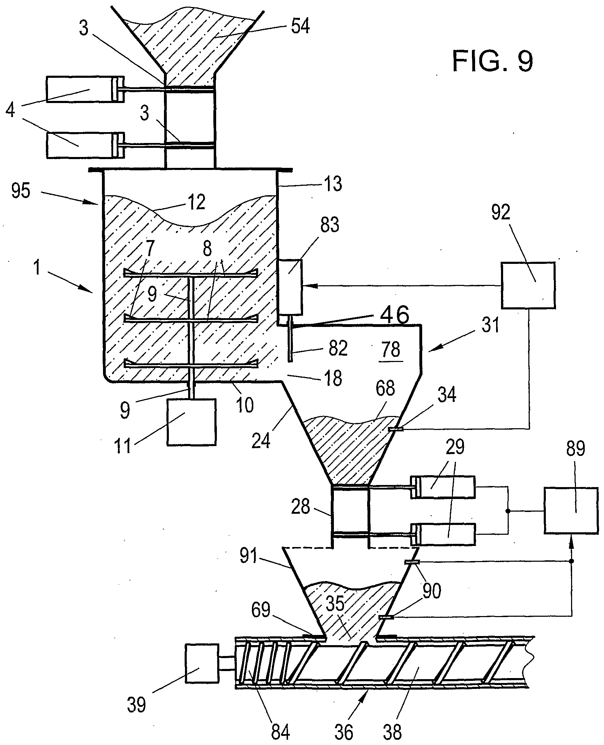

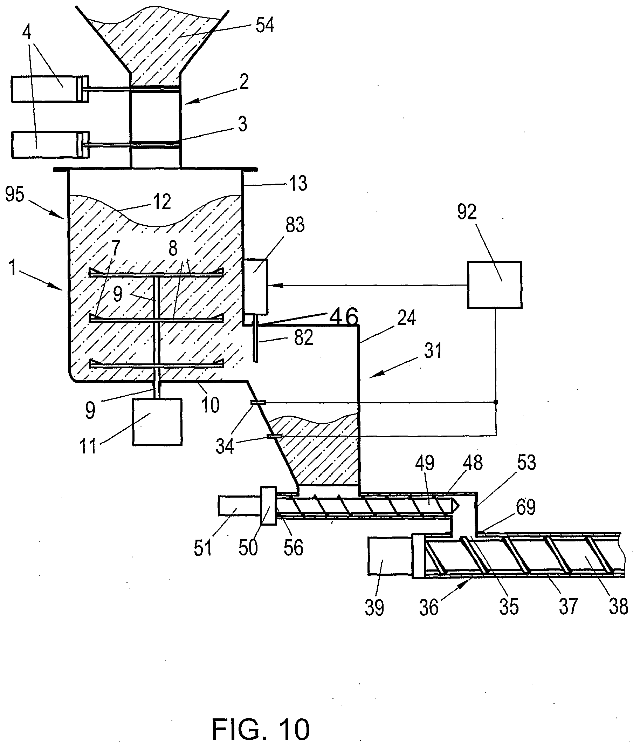

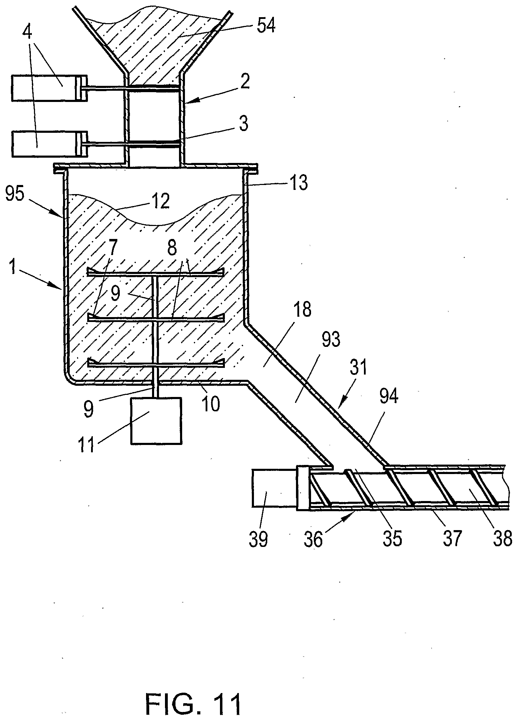

Ausführungsbeispiele der erfindungsgemäßen Vorrichtung sind nur in den Zeichnungen 8-10 schematisch dargestellt. Fig. 1 zeigt ein Ausführungsbeispiel mit einem füllstandsgeregelten Übergabetrichter. Die Fig. 2 und 3 zeigen je eine Ausführungsvariante zu Fig. 1. Fig. 4 zeigt eine Ausführungsform mit einer Dosiereinrichtung. Fig. 5 ist eine Ausführungsvariante zu Fig. 4. Fig. 6 zeigt eine weitere Ausführungsform mit einer Dosiereinrichtung. Die Fig. 7 und 8 zeigen weitere Ausführungsformen, bei welchen ein Übergaberaum direkt an die Befüllungsöffnung des Fremdextruders angeschlossen ist. Die Fig. 9 und 10 zeigen je ein Ausführungsbeispiel, bei welchem der Austrag aus dem Behälter durch ein von einem Schieber gebildetes Ventil gesteuert wird. Fig. 11 zeigt ein besonders einfaches Ausführungsbeispiel.

Bei der Ausführungsform nach Fig. 1 wird das zu verarbeitende thermoplastische Kunststoffmaterial, insbesondere PET (Polyäthylenterephthalat) einem als Vakuumreaktor ausgebildeten Behälter 1 von oben über eine Vakuumschleuse 2 zugeführt, deren oberes und unteres Ende durch je einen Schieber 3 dicht abschließbar ist. Die beiden Schieber 3 werden durch hydraulisch oder pneumatisch betätigbare doppeltwirkende Zylinder 4 zwischen einer Schließstellung und einer Offenstellung verschoben. Statt einer solchen Schleuse kann auch eine als Rotor ausgebildete Schleuse treten, z.B. eine Zellenradschleuse, wodurch der Behälter 1 zumindest einigermaßen kontinuierlich beschickt werden kann. Der Behälter 1 bildet eine einzige Behälterstufe 95, was jedoch nicht ausschließt, dass in dieser Behälterstufe 95 mehrere Behälter 1 parallel arbeitend vorgesehen sind.

Der Behälter 1 ist über eine Vakuumleitung 5 an eine Vakuumpumpe 6 angeschlossen. Im Behälter laufen in mehreren Ebenen übereinander angeordnete Werkzeuge 7 um die vertikale Behälterachse um, die auf im Abstand übereinander angeordneten Werkzeugträgern, vorzugsweise Trägerscheiben 8 befestigt sind, die auf einer gemeinsamen vertikalen Welle 9 sitzen, die vorzugsweise den Boden 10 in einem vakuumdichten Lager durchsetzt und von einem Motor 11 angetrieben ist. Durch den Umlauf der Werkzeuge 7 wird das in den Behälter 1 portionenweise oder kontinuierlich eingebrachte Material gemischt und erwärmt und gegebenenfalls, wenn die Werkzeuge 7 entsprechend ausgebildet sind, z.B. mit Schneiden, auch zerkleinert. Häufig ist eine solche Zerkleinerung nicht erforderlich, da das zu verarbeitende Material 12 schon in zerkleinerter Form in den Behälter 1 eingebracht wird, z.B. als Granulat oder als PET-Flaschensplitter. Wenngleich die erwähnte Umlaufbewegung der Werkzeuge 7 konstruktiv am einfachsten zu realisieren ist, kann auch eine andersgeartete Bewegung der Werkzeuge 7 für die erwähnte Vorbehandlung des Materiales 12 vorgesehen sein, z.B. auf- und abbewegte Werkzeuge 7 usw. Die durch die Werkzeuge 7 hervorgerufene Erwärmung des im Behälter 1 befindlichen Materiales wird durch Sensoren 14 überwacht, die über Leitungen 15 mit einer Steuereinrichtung 16 für die Steuerung der Drehzahl des Motors 11 verbunden sind. Dadurch kann das im Behälter 1 verarbeitete Material 12 stets auf einem gewünschten Temperaturniveau gehalten werden, so dass das Material lediglich erwärmt, getrocknet und gegebenenfalls zumindest teilweise kristallisiert wird, aber nicht plastifiziert. Die Materialtemperatur im Behälter 1 liegt daher stets unter der Schmelz- bzw. Plastifizierungstemperatur des verarbeiteten Materiales, sodass ein rieselfähiger, nicht klebriger Zustand des Materiales erhalten bleibt. Die einzelnen Werkzeugträgerscheiben 8 begrenzen im Behälter 1 mehrere übereinanderliegende Behandlungsräume 60 für das in den Behälter 1 von oben eingebrachte, zu verarbeitende Material 12, das bei seiner Verarbeitung durch die zwischen den Scheiben 8 und der Behälterseitenwand 13 bestehenden Ringspalte 17 allmählich nach unten absinkt und in den Bereich der untersten Trägerscheibe 8 gelangt. Dadurch wird eine ausreichende und eng definierte Verweilzeit des bearbeiteten Materiales im Behälter 1 sichergestellt und damit eine gleichmäßige Bearbeitung aller zugeführten Materialanteile. Die unterste Scheibe 8 ist in der Nähe des Behälterbodens 10 angeordnet, und ihre Werkzeuge schleudern das verarbeitete Material in eine auf etwa gleicher Höhe wie diese Scheibe 8 liegende Austragsöffnung 18 der Behälterseitenwand 13, an welche Öffnung 18 eine den kristallisierten Zustand des Materiales 12 erhaltende Übergabestrecke 31 anschließt, die zum Extruder 36 führt. Im dargestellten Ausführungsbeispiel beinhaltet diese Übergabestrecke 31 zunächst eine Austragsvorrichtung 96, welche den Austrag des Materiales 12 aus dem Behälter 1 unterstützt. Diese Austragsvorrichtung 96 hat ein Schneckengehäuse 19, dessen Einzugsöffnung an die Öffnung 18 dicht angeschlossen ist. Im Gehäuse 19 ist eine Schnecke 20 drehbar gelagert, welche als reine Förderschnecke ausgebildet ist, also kompressionslos arbeitet, so dass das von ihr aus der Öffnung 18 aufgenommene Material lediglich transportiert, jedoch nicht oder nur sehr wenig plastifiziert wird, sodass der rieselfähige Zustand des bearbeiteten Materiales erhalten bleibt. Die Schnecke 20 ist in der dargestellten Ausführungsform tangential an den Behälter 1 angeschlossen und an ihrem in Fig. 1 links liegenden Stirnende durch einen Motor 21 mit Getriebe 22 angetrieben. Statt des tangentialen Anschlusses kann auch ein radialer oder schräger Anschluss des Schneckengehäuses an die Behälterwand treten, gegebenenfalls auch ein nach unten gerichteter Anschluss. Die Schnecke fördert in Fig. 1 nach rechts, so dass das an ihrem Austragsende 23 austretende kristallisierte Material in einen Trichter 24 der vakuumdicht ausgebildeten Übergabestrecke 31 rieselt. Um das von der Schnecke 20 geförderte Material konstant auf einer gewünschten Temperatur und rieselfähig zu halten, kann das Schneckengehäuse 19 mit einer Temperiereinrichtung 25, z.B. einer Heizung, versehen sein. Alternativ oder zusätzlich hiezu kann im Kern der Schnecke 20 ein Kanal 26 für den Durchfluss eines Temperiermediums vorgesehen sein, das in den Kanal 26 über die Abtriebswelle des Getriebes 22 mittels einer Rotationseinführung in bekannter Weise eingeleitet wird. Falls erforderlich, kann zur Erhaltung der Rieselfähigkeit des Materiales die Temperatur des von der Schnecke 20 geförderten Materiales mittels zumindest eines Sensors 61 überwacht werden, dessen Signal über eine Leitung 62 an die Steuereinrichtung 16 gelegt ist.

Der Zustand des im Trichter 24 befindlichen Materiales 68, insbesondere dessen rieselfähiger Zustand, kann durch ein Schauglas 27 überwacht werden. Für die Überwachung des Füllstandes im Trichter 24 ist eine Füllstandsregelung 33 vorgesehen, deren Niveausonden 34 über Leitungen 63 an eine Einrichtung 64 zur Steuerung der Drehzahl des Motors 21 angeschlossen sein können, um so den Füllstand im Trichter 24 stets auf einem gewünschten Niveau halten zu können. Aus dem Trichter 24 rieselt das Material nach unten in eine Vakuumschleuse 28, die oben und unten in ähnlicher Weise, wie dies für die Schleuse 2 beschrieben wurde, durch mittels Zylindern 29 betätigbare Schieber 30 vakuumdicht abschließbar ist. Auch hier kann aber auch eine Zellenradschleuse od. dgl. Verwendung finden. Aus dem Ausgang 58 der Vakuumschleuse 28 fällt das in ihr befindliche Material bei Öffnung des Schiebers 30 nach unten in eine weitere trichterförmige Kammer 32 der Übergabestrecke 31, die ebenfalls mit einer Füllstandsregelung 33 mit Niveausonden 34 ausgebildet ist. Die Signale dieser Niveausonden 34 können die Betätigung des unteren Schiebers 30 der Vakuumschleuse 28 steuern, was nicht im einzelnen dargestellt ist. Der Ausgang der Kammer 32 ist mittels einer in beliebiger Weise, z.B. als Flanschverbindung, ausgebildeten, vorzugsweise luftdichten Kupplung 69 an die Befüllungsöffnung 35 des von einem Fremdextruder 36 gebildeten Extruders angeschlossen. Der der Befüllungsöffnung 35 benachbarte Einzugsbereich des Fremdextruders 36 muss hier nicht unbedingt vakuumdicht sein, da die zweckmäßig nahe der Befüllungsöffnung 35 in der Übergabestrecke 31 liegende Vakuumschleuse 28 die Aufrechterhaltung des Vakuums im wesentlichen Bereich der Übergabestrecke 31 zwischen Behälter 1 und Vakuumschleuse 28 sichert, und der zwischen Vakuumschleuse 28 und Befüllungsöffnung 35 liegende Bereich der Übergabestrecke 31 nur kurz ist, sodass sich das Material 12 in diesem Bereich nur kurzzeitig aufhält. Dadurch wird eine wesentliche Schädigung des Materiales vermieden. Im Gehäuse 37 des Fremdextruders 36 ist eine Schnecke 38 angeordnet, die durch einen Motor 39 angetrieben wird und mit einer Kompressionszone 40 versehen ist, so dass das von der Schnecke 38 transportierte Material plastifiziert und in diesem Zustand durch zumindest eine Düse 41 eines Extruderkopfes 42 ausgepresst und der weiteren Verarbeitung (z.B. Granulierung oder Einspritzung in eine Form) zugeführt wird.

Das verarbeitete Material steht von der Vakuumschleuse 2, deren Schleusenkammer 67 ebenfalls an die Vakuumpumpe 6 über eine Vakuumleitung 43 angeschlossen sein kann, bis zum Ausgang 58 der Vakuumschleuse 28 unter Vakuum, so dass jegliche Schädigung des verarbeiteten Materiales 12 durch Luftsauerstoff- und Luftfeuchteeinfluss vermieden ist. Um eine solche Schädigung auch im Bereich zwischen der Vakuumschleuse 28 und dem Extruder 36 möglichst zu vermeiden, kann die Kammer 32 möglichst dicht abgeschlossen und mit einer Zuleitung 44 für die Spülung mit trockenem und vorzugsweise warmem Inertgas versehen werden, das aus einer Gasquelle 45 zugeführt wird. Gegebenenfalls kann auch eine Spülung mit trockener Warmluft ausreichend sein, da eine völlige Luftdichtheit nicht erzielt werden kann, wenn der Fremdextruder nicht gasdicht ist, was häufig der Fall ist. Die Verweilzeit des Materiales in der Kammer 32 ist jedoch kurz, so dass die geringe Schädigung des Materiales praktisch unwesentlich ist.

Um die Befüllung der Schnecke 38 des Fremdextruders 36 zu erleichtern, ist die Einzugsöffnung 35 zweckmäßig oben am Gehäuse 37 des Fremdextruders 36 angeordnet, so dass das zugeführte Material unter Schwerkrafteinwirkung von selbst in das Innere des Schneckengehäuses 37 rieselt. Das in der Kammer 32 befindliche Material 68 bildet in der Kammer 32 einen Materialpolster, was zur gleichmäßigen Befütterung des Fremdextruders 36 beiträgt.

Es kann jedoch, wie Fig. 2 zeigt, der Ausgang 58 der Vakuumschleuse 28 der Übergabestrecke 31 auch direkt an die Einzugsöffnung 35 des Extruders 36 mittels der Kupplung 69 angeschlossen sein. Eine solche, an Aufwand sparende Ausführungsform kann Verwendung finden, wenn auf eine bestimmte Befütterungsweise des Extruders 36 nicht geachtet zu werden braucht, seine Schnecke 38 also auch voll befüttert werden darf, was z.B. bei entsprechendem Füllstand der Vakuumschleuse 28 durch Öffnung des unteren Schiebers 30 geschieht.

Bei den beiden bisher beschriebenen Ausführungsvarianten war die Voraussetzung gegeben, dass der Behälter 1 baulich nahe an den, insbesondere von einem Fremdextruder gebildeten, Extruder 36 herangerückt werden kann, so dass die beschriebenen Anschlüsse einfach durchführbar sind. Ist jedoch für eine solche Bauweise nicht genügend Platz beim Fremdextruder vorhanden oder ist es gewünscht, den oder die Behälter 1 räumlich getrennt vom Fremdextruder 36 anzuordnen, dann kann eine Bauweise nach Fig. 3 Verwendung finden. Sie unterscheidet sich von der Konstruktion nach Fig. 1 hauptsächlich dadurch, dass das bearbeitete Material 12 aus dem Ausgang 58 der Vakuumschleuse 28 in eine ein Sammelgefäß bildende weitere Kammer 70 rieselt, aus der das Material mittels einer Fördereinrichtung 71 an die gewünschte Stelle oberhalb des Fremdextruders 36 transportiert wird, zweckmäßig an eine oberhalb des Fremdextruders 36 liegende Stelle, um den weiteren Transport des Materiales 12 mittels Schwerkrafteinwirkung durchführen zu können. Die Fördereinrichtung 71 kann z.B. eine in einem Gehäuse gelagerte Schnecke sein, oder ein Druck- oder Saugförderer. Die Bauweise der Fördereinrichtung 71 kann so gestaltet sein, dass ein wesentlicher Luftzutritt zum von ihr transportierten Material 12 vermieden ist. Hierfür kann die Fördereinrichtung z.B. mit Inertgas beflutet sein, oder, wenn das von ihr transportierte Material nur kurz in ihr verbleibt, mit warmer Trockenluft. Aus dem Grund einer Vermeidung wesentlichen Luftzutrittes zum bearbeiteten Material ist die Kammer 70 über eine Leitung 72 an die Schutzgasquelle 45 angeschlossen, diese Leitung 72 kann auch für die zuvor erwähnte Schutzgasspülung der Fördereinrichtung 71 dienen, was durch die Anschlussleitung 73 dargestellt ist. Zweckmäßig reicht die Fördereinrichtung 71 abgedichtet bis in den Bodenbereich der Kammer 70, um von dort das Material auch bei geringem Füllstand in der Kammer 70 verlässlich fördern zu können. Der Füllstand des Materiales 12 in der Kammer 70 wird durch eine Niveausonde 34 überwacht, deren Signal an die Einrichtung 64 zur Steuerung der Drehzahl des Motors 21 gelegt ist.

Die Fördereinrichtung 71 wird von einem Motor 74 und einem Getriebe 75 angetrieben und fördert über eine Übergabekammer 76 das Material in einen Stutzen 77, durch welchen das Material in die Kammer 32 der Übergabeeinrichtung 31 rieselt. Ab dort entspricht die Bauweise jener nach Fig. 1.

Bei der Ausführungsform nach Fig. 4 schließt die Vakuumschleuse 28 über einen Rohrkrümmer 65 direkt an das Gehäuse 19 der Transportschnecke 20 an, es entfällt also der in Fig. 1 dargestellte Trichter 24. Um eine Dosiermöglichkeit für die Befütterung des Extruders 36 zu erzielen, fällt das im Behälter 1 kristallisierte, jedoch nicht plastifizierte und von der Schnecke 20 lediglich im rieselfähigen Zustand transportierte Kunststoffmaterial aus dem Ausgang 58 der Vakuumschleuse 28 in die geschlossene Kammer 32 der Übergabestrecke 31, in welcher eine Füllstandsregelungseinrichtung 33 mittels Niveausensoren 34 den Füllstand überwacht. Die Signale der den minimalen bzw. maximalen Füllstand in der Kammer 32 überwachenden Sonden 34 sind an die Einrichtung 64 zur Steuerung der Drehzahl des Motors 21 gelegt, um das von der Schnecke 20 geförderte Volumen in Abhängigkeit vom Füllstand in der Kammer 32 zu regeln. Ein weiterer Sensor 86 ist im Bereich des Rohrkrümmers 65 vorgesehen, sein Signal ist über die Leitung 87 ebenfalls an die Steuereinrichtung 64 gelegt. Dadurch wird eine Materialüberfüllung im Rohrkrümmer 65 vermieden.

Die Auslauföffnung der trichterförmigen Kammer 32 steht mit der Einzugsöffnung 47 einer Dosiereinrichtung 46 in Strömungsverbindung, die von einer in einem Gehäuse 48 drehbar gelagerten Transportschnecke 49 gebildet ist, die von einem Motor 50. angetrieben wird. Dieser Motor wird von einer Steuereinrichtung 51 angespeist, welche die Drehzahl der Transportschnecke 49 regelt und damit eine Dosierung bewirkt, welche gewichtsabhängig oder volumsabhängig sein kann. Das Gehäuse 48 der Transportschnecke 49 hat am Förderende der Schnecke 49 unten eine Auslassöffnung 52, durch welche das rieselfähig erhaltene Kunststoffmaterial durch einen Stutzen 53 in die Einzugsöffnung 35 des Fremdextruders 36 fällt. Die Dosiereinrichtung 46 erlaubt eine sehr gleichmäßige Beschickung des Extruders 36, was insbesondere dann von Bedeutung ist, wenn die Einzugs-Schneckengänge des Extruders 36 nicht voll gefüllt werden dürfen, was insbesondere bei Doppel- oder Mehrschneckenextrudern der Fall ist.

Um zu vermeiden, dass das Kunststoffmaterial auf dem Weg zwischen der Vakuumschleuse 28 und der Einzugsöffnung 35 des Extruders 36 durch Lufteinfluss geschädigt wird, sind sowohl die dichte Kammer 32 als auch der ebenfalls dichte Stutzen 53 über Leitungen 44 mit einer Gasquelle 45 verbunden. Hiefür kann ein warmes Inertgas verwendet werden, jedenfalls genügt auch die Spülung mit warmer Trockenluft, wenn die als Folge der kurzen Verweilzeit geringe Schädigung des Materiales in Kauf genommen werden kann.

Die Ausführungsform nach Fig. 5 unterscheidet sich von jener nach Fig. 4 dadurch, dass, ähnlich wie dies bei der Ausführungsform nach Fig. 3 beschrieben wurde, eine Fördereinrichtung 71 in der Übergabestrecke 31 vorgesehen ist, die den räumlichen Abstand zwischen dem Behälter 1 und der daran angeschlossenen Vakuumschleuse 28 und der an den Fremdextruder 36 angeschlossenen Dosiereinrichtung 46 überbrückt. Die Bauweise und der Antrieb dieser Fördereinrichtung 71 kann der im Zusammenhang mit Fig. 3 beschriebenen Bauweise entsprechen. Die Signale der Niveausonden 34 können über Leitungen 88 nicht nur eine Steuerung des Motors 21 bewirken, sondern auch eine Steuerung des Motors 74 der Fördereinrichtung 71.

Ein weiterer wesentlicher Unterschied zwischen den Ausführungsformen nach den Fig. 1, 2 und 3 einerseits und jenen nach den Fig. 4 und 5 anderseits ist, dass bei den erstgenannten Ausführungsformen der Trichter 24 und die Schleuse 28 eine Vordosierung in der Übergabeeinrichtung 31 bewirken und vakuumdicht sind. Hingegen muss bei den Ausführungsformen nach den Fig. 4 und 5 die im Wesentlichen von der Kammer 32 und der Schnecke 49 gebildeten Dosiereinrichtung nicht unbedingt unter Vakuum stehen, jedoch ist es zur Schonung des behandelten Materials zweckmäßig, zumindest die Kammer 32 mit Trockenluft oder Schutzgas zu spülen.

Bei der Ausführungsform nach Fig. 6 wird der Behälter 1 über die Vakuumschleuse 2 und einen Fülltrichter 54 von einer Fördereinrichtung 55 befüllt, hiefür kann ein Förderband oder eine Förderschnecke dienen. Die Vakuumschleuse 28 der Fig. 1 bis 5 entfällt, so dass die Anlage vom Behälter 1 bis ins Innere des Gehäuses 37 des Fremdextruders 36 unter Vakuum steht, was voraussetzt, dass der Einzugsbereich des Fremdextruders 36 vakuumdicht ist oder in diesen Zustand bei der Montage der Vorrichtung versetzt werden kann. Hiefür ist es zumeist lediglich erforderlich, den motorseitigen Abschluss 56 des Gehäuses 37 des Fremdextruders 36 vakuumdicht auszubilden, hierfür geeignete Maßnahmen sind bekannt und bedürfen hier keiner näheren Erläuterung.

Bei dieser Ausführungsform fördert die Transportschnecke 20 in ähnlicher Weise, wie dies bei der Ausführungsform nach Fig. 1 beschrieben wurde, in einen Trichter 24 der Übergabestrecke 31, der mit einer Füllstandsregelung 33 versehen ist, deren Niveausonden 34 den Füllstand im Trichter 24 abfühlen. Dies bewirkt eine Dosierung dadurch, dass das von den Sonden 34 gelieferte Signal über Leitungen 57 auf die Steuereinrichtung 21 gelegt ist, welche die Drehzahl des Antriebsmotors 22 der Transportschnecke 20 regelt. Der motorseitige Abschluss 56 des Gehäuses 48 der Schnecke 49 muss vakuumdicht ausgebildet sein. Die Schnecke 49 fördert, vorzugsweise volumensmäßig oder gewichtmäßig geregelt, das im rieselfähigen Zustand erhaltene Kunststoffmaterial in den Stutzen 53, von wo es nach unten in die Befüllungsöffnung 35 des Gehäuses 37 des Extruders 36 fällt. Es ist zweckmäßig, auch im Stutzen 53 den maximalen Füllstand durch eine Sonde 59 zu überwachen, um eine Überfüllung des Stutzens 53 zu vermeiden. Das Signal dieser Sonde 59 kann z.B. die Steuereinrichtung 51 über eine Leitung 66 beeinflussen.

Zwar würde sich das im Behälter 1 von der Vakuumpumpe 6 erzeugte Vakuum über das Gehäuse 19 der Schnecke 20 in den Übergabetrichter 24 fortsetzen und von dort über das Gehäuse 48 der Transportschnecke 49 bis in den Extruder 36 hineinreichen, jedoch ist es günstiger, über Leitungen 5 auch den Übergabetrichter 24 und den Stutzen 53 zu evakuieren. Hierfür können gegebenenfalls gesonderte Vakuumquellen 6 vorgesehen sein, aus Ersparnisgründen wird man jedoch wohl eine gemeinsame Vakuumquelle 6 anwenden.

Auch bei der Ausführungsform nach Fig. 6 kann eine Fördereinrichtung 71, wie sie in den Fig. 3 und 5 dargestellt ist, Verwendung finden, um den Behälter 1 räumlich getrennt vom Fremdextruder 36 anordnen zu können. Diese Fördereinrichtung wäre in Fig. 6 zweckmäßig zwischen dem Trichter 24 und der Dosiereinrichtung 46 einzuschalten. Ihre Bauweise kann der zuvor beschriebenen Bauweise, jedoch in vakuumdichter Ausführung, entsprechen.

Bei den Ausführungsformen nach den Fig. 7 und 8 ist die Ausgangsöffnung eines einen Übergaberaum 78 umschließenden Trichters 24 der Übergabestrecke 31 unmittelbar dicht an die Befüllungsöffnung 35 des Fremdextruders 36 mittels der Kupplung 69 angeschlossen. Es entfällt hier die früher beschriebene Vakuumschleuse 28. Gemäß Fig. 7 wird der Trichter 24 von einer Fördereinrichtung 79 befüllt, die hier als kompressionslose Schnecke 20 ausgeführt ist, die in ähnlicher Weise an den Behälter 1 angeschlossen ist, wie dies Fig. 1 zeigt. Der Füllstand des am Austragsende 23 der Schnecke 20 in den Übergaberaum 78 fallenden Materials wird im Übergaberaum 78 durch eine Füllstandsregelung 33 überwacht, die zumindest eine Niveausonde 34 für diesen Füllstand aufweist. Das so erhaltene Niveausignal wird von einer Steuereinrichtung 80 ausgewertet, die über eine Leitung 81 an den Motor 21 der Förderschnecke 20 angeschlossen ist. Auf diese Weise regelt die Füllstandsregelung 33 die Drehzahl der Schnecke 20 derart, dass im Übergaberaum 78 stets ein vorbestimmter, gewünschter Füllstand des Materiales 68 aufrechterhalten wird.

Gemäß Fig. 8 ist der vom Trichter 24 gebildete Übergaberaum 78 unmittelbar an die Austragsöffnung 18 des Behälters 1 angeschlossen, es entfällt also die Fördereinrichtung 79. Statt dessen ist zwischen dem Behälter 1 und dem Übergaberaum 78 die Dosiereinrichtung 46 angeordnet, die hier von einem Ventil 82 gebildet ist, z.B. einem Schieberventil. Dessen Schieber wird von einem pneumatischen oder hydraulischen Aggregat 83 bewegt, das von der Steuereinrichtung 80 der Füllstandsregelung 33 gesteuert wird. Dies geschieht derart, dass im Trichter 24 stets der gewünschte Füllstand des Materiales 68 aufrecht erhalten wird. Die Befüllung des Übergaberaumes 78 erfolgt hier durch Einschleudern des von den Werkzeugen 7 in Umlaufbewegung im Behälter 1 gebrachten Materiales in die Austragsöffnung 18 des Behälters 1 durch Zentrifugalwirkung oder bei entsprechender Ausbildung der Werkzeuge 7 auch durch Spachteleffekt. Der in der Halboffenstellung dargestellte Schieber des Ventiles 82 kann hiebei so eingestellt werden, dass laufend eine Beschickung des Übergaberaumes 78 mit rieselfähigem Material aus dem Behälter 1 stattfindet, also in kontinuierlicher Weise. Stattdessen kann aber auch eine portionenweise Beschickung des Übergaberaumes 78 stattfinden, wenn der Schieber des Ventils 82 nur zeitweise aus der Schließstellung geöffnet wird.

Da sich das behandelte Material nur verhältnismäßig kurz im Übergaberaum 78 aufhält, ist eine zusätzliche Evakuierung oder Schutzgasspülung des Übergaberaumes 78 hier nicht unbedingt erforderlich, insbesondere dann nicht, wenn der den Übergaberaum 78 umschließende Trichter 24 dicht ausgebildet und der Einzugsbereich des Fremdextruders 36 zumindest im Wesentlichen vakuumdicht ist. Ist dies nicht der Fall, dann können die vorangehend beschriebenen Maßnahmen Verwendung finden. So ist in Fig. 7 dargestellt, dass der Trichter 27 an die Vakuumpumpe 6 über eine Leitung 85 angeschlossen ist.

In den Fig. 7 und 8 ist aus Gründen der Einfachheit nur eine einzige Trägerscheibe 8 mit Werkzeugen 7 dargestellt. Es ist jedoch vorzuziehen, auch Ausführungsformen nach den Fig. 7 und 8 mit mehreren Trägerscheiben 8 bzw. andersgearteten Werkzeugträgern auszubilden.

In den Fig. 7 und 8 ist das motorseitige Ende der Schnecke 38 des Fremdextruders 36 in an sich bekannter Weise mit einem Dichtgewinde 84 versehen, dessen Förderrichtung gleich ist jener der Schnecke 38, jedoch ist die Gangsteigung und Gangtiefe des Dichtgewindes 84 geringer als jenes der Schnecke 38. Ein solches Dichtgewinde kann selbstverständlich auch bei den anderen Ausführungsformen Verwendung finden.

Bei der Ausführungsform nach Fig. 9 regelt ein mit einem Schieber versehenes Ventil 82 die Austragung des Materiales 12 aus dem Behälter 1 in ähnlicher Weise, wie dies in Fig. 8 beschrieben wurde. Das aus dem Behälter 1 durch die Werkzeuge 7 ausgeschleuderte Material wird im Trichter 24 aufgefangen, der Füllstand im Trichter 24 wird mittels der Niveausonde 34 überwacht, die das Schieberventil 82 in ähnlicher Weise steuert, wie dies bei Fig. 8 beschrieben wurde. An das Auslassende des Trichters 24 ist eine Vakuumschleuse 28 angeschlossen, ihre beiden Schieber werden mittels Zylindern 29 betätigt, die an eine Steuerung 89 angeschlossen sind, die von den Signalen zweier Niveausonden 90 beaufschlagt ist, die den Füllstand in einem auf die Vakuumschleuse 28 folgenden weiteren Trichter 91 überwachen, der mittels der Kupplung 69 an die Befüllungsöffnung 35 des Extruders 36 angeschlossen ist. Bei dieser Ausführungsform muss der Trichter 91 nicht unbedingt vakuumdicht sein, was durch eine strichlierte Darstellung seiner Wand angedeutet ist. Die dadurch bedingte geringe Schädigung des Materiales kann in Kauf genommen werden, da sich das Material im Trichter 91 nur sehr kurzzeitig aufhält.

Die Ausführungsform nach Fig. 10 ähnelt jener nach Fig. 6, jedoch tritt bei Fig. 10 anstelle der Förderschnecke 20 das den Austrag aus dem Behälter 1 steuernde Ventil 82. Die beiden den Füllstand im Trichter 24 überwachenden Sonden 34 liefern ihre Signale 4 an eine Steuereinrichtung 92 für die Steuerung des Aggregates 83 des Ventiles 82 in ähnlicher Weise wie bei Fig. 9.

Besonders konstruktiv einfach ist die Ausführungsform nach Fig. 11: Bei ihr ist die Übergabestrecke 31 bloß von einem Kanal 93 gebildet, welcher von einem Rohr 94 begrenzt ist, das die Austragsöffnung 18 des Behälters 1 mit der Befüllungsöffnung 35 des Extruders 36 unmittelbar und dicht verbindet. Der Austrag des im Behälter 1 bearbeiteten Materials erfolgt hier durch die Schleuderwirkung der Werkzeuge 7, die Rieselfähigkeit des Materiales sichert, dass das Material im zum Extruder 36 geneigten Rohr 94 verlässlich zur Befüllungsöffnung 35 gelangt. Bei dieser Ausführungsform müssen der Extruder 36 in seinem Einzugsbereich und die Übergabestrecke 31 gasdicht sein, da ansonsten das Vakuum im Behälter 1 gestört wird.

Bei allen Ausführungsformen findet ein Aufschmelzen bzw. Plastifizieren des verarbeiteten Kunststoffmateriales, insbesondere PET, erst im Extruder 36 statt. Dieser kann ein Einschneckenextruder oder ein Mehrschneckenextruder sein und mit oder ohne Entgasung ausgeführt sein.

Speziell dann, wenn der Extruder 36 ein Mehrschneckenextruder ist, werden die Varianten mit Dosiereinrichtung 46 zur Anwendung kommen. Dies hat verfahrenstechnische Vorzüge. Doppelschnecken plastifizieren nämlich auch im nur teilgefüllten (unterfütterten) Zustand gut und es ist eine Durchsatzregelung im Sinne eines konstanten Durchsatzes mittels der von der Dosiereinrichtung durchgeführten Regelung allein möglich. Da teilgefüllte Schneckengänge dem Luftsauerstoff viel Angriff auf den plastifizierten heißen Kunststoff ermöglichen, ist für diese Anwendungsfälle die Evakuierung bzw. eine Spülung mit Inertgas der Dosiereinrichtung 46 und des Fremdextruders 36 einer Trockenluftspülung vorzuziehen.

## Patentansprüche

1. Vorrichtung zur Befüllung eines Extruders (36) mit vorbehandeltem thermoplastischen Kunststoffmaterial, insbesondere PET, mit zumindest einem evakuierbaren Behälter (1), in welchem bewegte, insbesondere umlaufende, Werkzeuge (7) für eine Vorbehandlung des Materials vorhanden sind, wobei die Vorbehandlung eine Trocknung und gegebenenfalls
Kristallisation oder Teilkristallisation des Materials beinhaltet, und
wobei jeder Behälter (1) eine Austragsöffnung (18) für das, vorzugsweise im zumindest teilweise kristallisierten Zustand befindliche, Material aufweist., welche Austragsöffnung (18) in Bezug auf das Material in Fließverbindung mit der Befüllungsöffnung (35) des Extruders (36) steht, wobei eine den rieselfähigen Zustand des in den Behaltern (1) vorbehandelten Materiales erhaltende Übergabestrecke (31) vorgesehen ist, die mit der Austragsöffnung (18) der Behälter (1) in Fließverbindung für das Material steht und dicht an die Austragsöffnung (18) anschließt, wobei diese Übergabestrecke (31) an ihrem Ausgang eine direkt und dicht an die Befüllungsöffnung (35) des Extruders (36) anschließbare Kupplung (69) aufweist, **dadurch gekennzeichnet, dass** zumindest eine Dosiereinrichtung (46) für die Befüllung dieses Extruders (36) und zumindest eine Füllstandsregelungseinrichtung (33) *vorgesehen* sind, wobei die Dosiereinrichtung (46) über die von der Füllstandsregelungseinrichtung (33) ermittelten Füllstandswerte gesteuert ist, wobei
*die Dosiereinrichtung (46) zwischen der Austragsöffnung (18)* des *Behälters (1) und der Übergabestrecke (31) vorgesehen ist und als ein den Austrag des Materials (12) aus dem Behälter (1) regelndes Ventil (82) ausgebindet ist.*

2. Vorrichtung nach Anspruch 1, **dadurch gekennzeichnet, dass** die Vorrichtung selbst extruderlos und mit der Kupplung (69) an die Befüllungsöffnung (35) eines den Extruder bildenden Fremdextruders (36) abschließbar ist.

3. Vorrichtung nach Anspruch 2, **dadurch gekennzeichnet, dass** für den Anschluss an die Befüllungsöffnung (35) des Fremdextruders (36), dessen Einzugsbereich vakuumdicht ist. die Übergabestrecke (31) evakuierbar ist.

4. Vorrichtung nach Anspruch 1 oder 2, **dadurch gekennzeichnet, dass**, insbesondere für den Anschluss an die Befüllungsöffnung (35) eines Fremdextruders (36), dessen Einzugsbereich nicht vakuumdicht ist, die Übergabestrecke (31) eine Vakuumschleuse (28) enthält, die vorzugsweise in der Übergabestrecke (31) nahe der Befüliungsöffnung (35) bzw. nahe der Kupplung (69) angeordnet ist.

5. Vorrichtung nach einem der Ansprüche 1 bis 4, **dadurch gekennzeichnet, dass** die Übergabestrecke (31) zumindest einen Trichter (24, 91) oder trichterähnlichen Sammelraum aufweist, in den das Material (12) hineinrieselt, und dessen Ausgangsöffnung in Fließverbindung steht mit dem die Kupplung (69) aufweisenden Ausgang der Übergabestrecke (31).

6. Vorrichtung nach einem der Ansprüche 1 bis 5, **dadurch gekennzeichnet, dass** die Übergabestrecke (31) eine an die Austragsöffnung (18) des Behälters (1) angeschlossene Austragsvorrichtung (96) aufweist.

7. Vorrichtung nach Anspruch 6, **dadurch gekennzeichnet, dass** die Austragsvorrichtung (96) eine kompressionslose Schnecke (20) oder einen Zellenradförderer aufweist.

8. Vorrichtung nach Anspruch 6 oder 7, **dadurch gekennzeichnet, dass** eine Einrichtung (64) zur Regelung des Fördervolumens oder Fördergewichtes der Austragsvorrichtung (96) vorgesehen ist.

9. Vorrichtung nach einem der Ansprüche 1 bis 5, **dadurch gekennzeichnet, dass** das zwischen der Austragsöffnung (18) des Behälters (1) und der Übergabestrecke (31) den Austrag des Materials (12) aus dem Behälter (1) regelndes Ventil (82) *ein Schieber ist.*

10. Vorrichtung nach einem der Ansprüche 1 bis 9, **dadurch gekennzeichnet, dass** die Dosiereinrichtung (46) zumindest ein das Material in Richtung zum Extruder (36) transportierendes Förderorgan aufweist, dessen Fördervolumen oder Fördergewicht in Abhängigkeit vom Füllbedarf des Extruders (36) gesteuert ist.

11. Vorrichtung nach einem der Ansprüche 1 bis 10, **dadurch gekennzeichnet, dass** die Übergabestrecke (31) zumindest eine Fördereinrichtung (71) für das rieselfähige Material aufweist, z.B. eine Transportschnecke, welche Fördereinrichtung (71) zumindest einen Großteil eines räumlichen Abstandes zwischen Behälter (1) und Extruder (36) überbrückt.

12. Vorrichtung nach einem der Ansprüche 1 bis 11, **dadurch gekennzeichnet, dass** die gesamte Übergabestrecke (31) gegenüber der Umgebungsluft abgeschlossen und evakuierbar ist.

13. Vorrichtung nach einem der Ansprüche 1 bis 12, **dadurch gekennzeichnet, dass** die Übergabestrecke (31) zumindest einen unevakuierten Bereich aufweist, der vorzugsweise mit einem das in diesem Bereich befindliche Material schützenden gasförmigen Medium gespült ist, z.B. mit Inertgas, Trockenluft oder Warmluft.

14. Vorrichtung nach einem der Ansprüche 1 bis 13, **dadurch gekennzeichnet, dass** die Übergabestrecke (31) von einem Kanal (93) gebildet ist, der die Austragsöffnung (18) des Behälters (1) unmittelbar mit der Kupplung (69) verbindet,

15. Vorrichtung nach einem der Ansprüche 1 bis 14, **dadurch gekennzeichnet, dass** der Behälter (1) mehrere von übereinander angeordneten Trägerscheiben (8) für die umlaufenden Werkzeuge (7) begrenzte Behandlungsräume (60) aufweist.

16. Vorrichtung nach einem der Ansprüche 1 bis 15, **dadurch gekennzeichnet, dass** je Behälter (1) im oder am Behälter (1) zumindest ein Sensor (14) für die Überwachung der Temperatur des im Behälter (1) behandelten Materials (12) vorgesehen ist.

17. Vorrichtung nach einem der Ansprüche 1 bis 16, **dadurch gekennzeichnet, dass** eine Einrichtung (64) zur Regelung der Bewegung der Werkzeuge (7), insbesondere der Drehzahl umlaufender Werkzeuge (7), vorgesehen ist.

18. Vorrichtung nach einem der Ansprüche 7 bis 17, **dadurch gekennzeichnet, dass** im Kern der Schnecke (20) ein Kanal (26) für den Durchfluss eines Tempariermediums vorgesehen ist.

19. Vorrichtung nach einem der Ansprüche 1 bis 18, **dadurch gekennzeichnet, dass** nur eine einzige Behälterstufe (95) mit vorzugsweise nur einem einzigen Behälter (1) vorhanden ist.

## Claims

1. A device for filling an extruder (36) with pretreated thermoplastic material, in particular PET, with at least one evacuable container (1), in which moving, in particular, rotating tools (7) are present for a pretreatment of the material, wherein the pretreatment includes a drying and, if applicable, crystallization or partial crystallization of the material, and wherein each container (1) has a discharge opening (18) for the material located preferably in the at least partially crystallized state, which discharge opening (18) in respect to the material is in flow communication with the filling opening (35) of the extruder (36), wherein a transfer path (31) receiving the flowable state of the material pretreated in the container (1) is provided, which is in flow communication for the material with the discharge opening (18) of the container (1) and connects tightly to the discharge opening (18), wherein said transfer path (31) at its outlet has a coupling (69) connectable directly and tightly to the filling opening (35) of the extruder (36), **characterized in that** at last one metering device (46) for the filling of this extruder (36) and at least one filling level control device (33) are provided, wherein the metering device (46) is controlled via the filling level values determined by the filling level control device (33), wherein the metering device (46) is provided between the discharging opening (18) of the container (1) and the transfer path (31) and is designed as a valve (82) controlling the discharge of the material (12) from the container (1).

2. A device according to Claim 1, **characterized in that** the device itself can be connected without an extruder and with the coupling (69) to the filling opening (35) of an external extruder (36) forming the extruder.

3. A device according to Claim 2, **characterized in that** for the connection to the filling opening (35) of the external extruder (36), the feed section of which is vacuum-tight, the transfer path (31) is evacuable.

4. A device according to Claim q or 2, **characterized in that** in particular for the connection to the filling opening (35) of the external extruder (36), the feed section of which is not vacuum-tight, the transfer path (31) contains a vacuum lock (28), which is arranged preferably in the transfer path (31) close to the filling opening (35) or close to the coupling (69).

5. A device according to any one of Claims 1 to 4, **characterized in that** the transfer path (31) has at least one hopper (24, 91) or hopper-like collection room, into which the material (12) flows, and the discharge opening of which is in flow communicatioin with the outlet of the transfer path (31) having the coupling (69).

6. A device according to any one of Claims 1 to 5, **characterized in that** the transfer path (31) has a discharging device (96) connected to the discharge opening (18) of the container (1).

7. A device according to Claim 6, **characterized in that** the discharging device (96) has a screw (20) without compression or a cellular wheel conveyor.

8. A device according to Claim 6 or 7, **characterized in that** a device (64) is provided for the control of the volume conveyed or weight conveyed of the discharging device (96).

9. A device according to any one of Claims 1 to 5, **characterized in that** the valve (82) controlling the discharge of the material (12) from the container (1) between the discharge opening (18) of the container (1) and the transfer path (31) is a slide.

10. A device according to any one of Claims 1 to 9, **characterized in that** the metering device (46) has at least one conveying element transporting the material in the direction towards the extruder (36), the conveyed volume or conveyed weight of which is controlled depending on the filling requirement of the extruder (36).

11. A device according to any one of Claims 1 to 10, **characterized in that** the transfer path (31) has at least one conveyor (71) for the flowable material, for example, a transport screw, which conveyor (71) bridges at least a large part of a spatial distance between container (1) and extruder (36).

12. A device according to any one of Claims 1 to 11, **characterized in that** the entire transfer path (31) is closed in relation to the ambient air and is evacuable.

13. A device according to any one of Claims 1 to 12, **characterized in that** the transfer path (31) has at least one non-evacuable area, which preferably is flushed with gaseous medium protecting the material located in this area, for example, with inert gas, dry air or hot air.

14. A device according to any one of Claims 1 to 13, **characterized in that** the transfer path (31) is formed by a channel (93), which connects the discharge opening (18) of the container (1) directly with the coupling (69).

15. A device according to any one of Claims 1 to 14, **characterized in that** the container (1) has several treatment rooms (60) limited by carrier discs (8) arranged on top of one another for the rotating tools (7).

16. A device according to any one of the Claims 1 to 15 **characterized in that** each container (1) is provided in or on the container (1) at least one sensor (14) for the monitoring of the temperature of the material (12) treated in the container (1).

17. A device according to any one of Claims 1 to 16, **characterized in that** a device (64) is provided for the control of the movement of the tools (7), in particular the rotational speed of the rotating tools (7).

18. A device according to any one of Claims 7 to 17, **characterized in that** in the core of the screw (20) a channel (26) is provided for the flow through of a temperature control medium.

19. A device according to any one of Claims 1 to 18, **characterized in that** only a single container stage (95) is present with preferably only a single container (1).

## Revendications

1. Dispositif de remplissage d'une extrudeuse (36) avec une matière plastique thermoplastique pré-traitée, plus particulièrement du PET, avec au moins un récipient pouvant être mis sous vide (1), dans lequel se trouvent des outils mobiles (7) plus particulièrement rotatifs, pour un pré-traitement du matériau, le pré-traitement comprenant un séchage et, le cas échéant, une cristallisation ou une cristallisation partielle du matériau et chaque récipient (1) comprenant une ouverture d'extraction (18) pour le matériau, se trouvant de préférence dans un état partiellement cristallisé, cette ouverture d'extraction (18) se trouvant, par rapport au matériau, en liaison fluidique avec l'ouverture de remplissage (35) de l'extrudeuse (36), une portion de transfert (31) maintenant la capacité d'écoulement du matériau pré-traité dans les récipients (1) étant prévue, qui est en liaison fluidique avec l'ouverture d'extraction (18) des récipients (1) pour le matériau et qui est relié de manière étanche à l'ouverture d'extraction (18), cette portion de transfert (31) comprenant, au niveau de sa sortie, un accouplement (69) pouvant être relié directement et de manière étanche à l'ouverture de remplissage (35) de l'extrudeuse (36),
**caractérisé en ce que**
au moins un dispositif de dosage (46) est prévu pour le remplissage de cette extrudeuse (36) et au moins un dispositif de régulation du niveau de remplissage (33) étant prévu, le dispositif de dosage (46) étant contrôle par les valeurs de niveau de remplissage déterminées par le dispositif de régulation du niveau de remplissage (33), le dispositif de dosage (46) étant disposé entre l'ouverture d'extraction (18) du récipient (1) et la portion de transfert (31) et étant conçu comme une soupape (82) régulant l'extraction du matériau (12) hors du récipient (1).

2. Dispositif selon la revendication 1, **caractérisé en ce que** le dispositif lui-même, sans extrudeuse et avec l'accouplement (69), peut être relié à l'ouverture de remplissage (35) d'une extrudeuse externe (36) constituant l'extrudeuse.

3. Dispositif selon la revendication 2, **caractérisé en ce que**, pour le raccordement à l'ouverture de remplissage (35) de l'extrudeuse externe (36), dont la zone d'introduction est étanche au vide, la portion de transfert (31) peut être mise sous vide.

4. Dispositif selon la revendication 1 ou 2, **caractérisé en ce que**, plus particulièrement pour le raccordement à l'ouverture de remplissage (35) d'une extrudeuse externe (36), dont la zone d'introduction n'est pas étanche au vide, la portion de transfert (31) comprend un sas à vide (28) qui est disposé de préférence dans la portion de transfert (31) à proximité de l'ouverture de remplissage (35) ou à proximité de l'accouplement (69).

5. Dispositif selon l'une des revendications 1 à 4, **caractérisé en ce que** la portion de transfert (31) comprend au moins un entonnoir (24, 91) ou un espace de collecte en forme d'entonnoir, dans lequel le matériau (12) s'écoule et dont l'ouverture de sortie est en liaison fluidique avec la sortie de la portion de transfert (31) comprenant l'accouplement (69).

6. Dispositif selon l'une des revendications 1 à 5, **caractérisé en ce que** la portion de transfert (31) comprend un dispositif d'extraction (96) relié à l'ouverture d'extraction (18) du récipient (1).

7. Dispositif selon la revendication 6, **caractérisé en ce que** le dispositif d'extraction (96) comprend une vis sans fin sans compression (20) ou un convoyeur à roues cellulaires.

8. Dispositif selon l'une des revendications 6 ou 7, **caractérisé en ce qu'**un dispositif (64) est prévu pour la régulation du volume de convoyage ou du poids de convoyage du dispositif d'extraction (96).

9. Dispositif selon l'une des revendications 1 à 5, **caractérisé en ce que** la soupape (82) régulant l'extraction du matériau (12) hors du récipient (1) entre l'ouverture d'extraction (18) du récipient (1) et la portion de transfert (31) est un poussoir.

10. Dispositif selon l'une des revendications 1 à 9, **caractérisé en ce que** le dispositif de dosage (46) comprend au moins un organe de convoyage transportant le matériau en direction de l'extrudeuse (36), dont le volume de convoyage ou le poids de convoyage est contrôlé en fonction des besoins en remplissage de l'extrudeuse (36).

11. Dispositif selon l'une des revendications 1 à 10, **caractérisé en ce que** la portion de transfert (31) comprend au moins un dispositif de convoyage (71) pour le matériau fluide, par exemple une vis sans fin de transport, ce dispositif de convoyage pontant au moins une grande partie d'une distance spatiale entre le récipient (1) et l'extrudeuse (36).

12. Dispositif selon l'une des revendications 1 à 11, **caractérisé en ce que** l'ensemble de la portion de transfert (31) est étanchéifié par rapport à l'air ambiant et peut être mis sous vide.

13. Dispositif selon l'une des revendications 1 à 12, **caractérisé en ce que** la portion de transfert (31) comprend au moins une zone ne pouvant pas être mise sous vide, qui est rincée de préférence avec un milieu gazeux protégeant le matériau se trouvant dans cette zone, par exemple avec un gaz inerte, de l'air sec ou de l'air chaud.

14. Dispositif selon l'une des revendications 1 à 13, **caractérisé en ce que** la portion de transfert (31) est constituée d'un canal (93) qui relie directement l'ouverture d'extraction (18) du récipient (1) avec l'accouplement (69).

15. Dispositif selon l'une des revendications 1 à 14, **caractérisé en ce que** le récipient (1) comprend plusieurs espaces de traitement (60) limités par des disques de support (8) superposés pour les outils rotatifs (7).

16. Dispositif selon l'une des revendications 1 à 15, **caractérisé en ce que**, au niveau de chaque récipient (1) ou sur chaque récipient (1) est prévu au moins un capteur (14) pour la surveillance de la température du matériau (12) traité dans le récipient (1).

17. Dispositif selon l'une des revendications 1 à 16, **caractérisé en ce qu'**un dispositif (64) est prévu pour la régulation du mouvement des outils (7), plus particulièrement de la vitesse de rotation des outils rotatifs (7).

18. Dispositif selon l'une des revendications 7 à 17, **caractérisé en ce que**, au coeur de la vis sans fin (20), se trouve un canal (26) pour l'écoulement d'un milieu de régulation de la température.

19. Dispositif selon l'une des revendications 1 à 18, **caractérisé en ce que** seul un étage de récipient (95) existe avec de préférence un seul récipient (1).
